# EUROPEAN PATENT APPLICATION

(11) **EP 4 711 486 A1**
(43) Date of publication of application: **18.03.2026**
(21) Application number: 24842416.0
(22) Date of filing: 18.07.2024
(51) Int. Cl.: C22C 38/34, C22C 38/04, C22C 38/06, C21C 7/06, C21C 7/10, C21C 7/068, C21D 8/12, C22C 33/04, H02K 1/02, C21D 8/02

(54) **NON-ORIENTED ELECTRICAL STEEL SHEET WITH EXCELLENT HIGH-TEMPERATURE FATIGUE PERFORMANCE AND MANUFACTURING METHOD THEREFOR**

(30) Priority: 18.07.2023 CN 202310881257
(71) Applicant: BAOSHAN IRON & STEEL CO., LTD., Shanghai 201900 (CN)
(72) Inventor: FANG, Xianshi, Shanghai 201900 (CN); WANG, Bo, Shanghai 201900 (CN); HAO, Yunwei, Shanghai 201900 (CN); ZHOU, Lin, Shanghai 201900 (CN)
(74) Representative: Maiwald GmbH
(86) International application number: PCT/CN2024/106143
(87) International publication number: WO 2025/016428

(57) **Abstract**

The present disclosure relates to a non-oriented electrical steel sheet with excellent high-temperature fatigue performance. In addition to Fe and inevitable impurities, the non-oriented electrical steel sheet further comprises the following chemical elements in mass percentage: 0<C≤0.0028%, Si: 3.05-3.95%, Mn: 0.12-0.65%, Al: 0.14-1.15%, Sn: 0.0035-0.25%; and the number of Al₂O₃ inclusions with a size of 1.5 µm or more in the non-oriented electrical steel sheet is not more than 4.5 counts/mm². In addition, the present disclosure further relates to a method for manufacturing the non-oriented electrical steel sheet, comprising the following steps: smelting, RH refining, casting, hot rolling, normalizing annealing, cold rolling, final annealing, and application of insulation coating, wherein in the RH refining step: a circulating gas flow rate V₁ during decarburization and a circulating gas flow rate V₀ at the end of decarburization satisfy the following relationships: V₁/V₀≥1.12, and V₀ ≥ 135 Nm³/h; and after decarbonization, a free oxygen content in molten steel is not more than 225 ppm.

## Description

### TECHNICAL FIELD

The present invention relates to a steel sheet and a manufacturing method therefor, in particular to a non-oriented electrical steel sheet and a manufacturing method therefor.

### BACKGROUND

With the rapid development of the new energy vehicle market, the drive motors for electric vehicles, as core components, are continuously evolving toward high power density, increased rotational speed, and lighter weight.

Generally, the rated operating environment temperature of the drive motor is higher than room temperature. To accommodate high-speed operation under such high-temperature conditions, the non-oriented silicon steel material used as the rotor must possess excellent high-temperature fatigue performance and yield strength to ensure sufficient stability and safety during repeated operation, preventing operational anomalies such as deformation, fracture, or sudden shutdown.

However, there is currently no mature technical solution in the prior art that can address the above technical problems.

In view of this, there is a need to provide a non-oriented electrical steel sheet that can be used in drive motors and meet the above requirements.

### SUMMARY

One of the objectives of the present disclosure is to provide a non-oriented electrical steel sheet with excellent high-temperature fatigue performance. The non-oriented electrical steel sheet exhibits excellent high-temperature fatigue performance, enabling it to meet the requirements for high-speed rotation of driving motors within the temperature range from room temperature to 150 °C without deformation or fracture.

In order to achieve the above objective, the present disclosure provides a non-oriented electrical steel sheet, wherein in addition to Fe and inevitable impurities, the non-oriented electrical steel sheet further comprises the following chemical elements in mass percentage: 0<C≤0.0028%, Si: 3.05-3.95%, Mn: 0.12-0.65%, Al: 0.14-1.15%, Sn: 0.0035-0.25%; wherein the number of Al₂O₃ inclusions with a size of 1.5 µm or more in the non-oriented electrical steel sheet is not more than 4.5 counts/mm².

Preferably, the non-oriented electrical steel sheet according to the present disclosure comprises the following chemical elements in mass percentage:
0<C≤0.0028%, Si: 3.05-3.95%, Mn: 0.12-0.65%, Al: 0.14-1.15%, Sn: 0.0035-0.25%; the balance being Fe and inevitable impurities.

Preferably, the non-oriented electrical steel sheet according to the present disclosure further comprises Ca and/or REM, wherein in mass percentage, Ca: 0.0002-0.0065% and/or REM: 0.0002-0.015%.

Preferably, the non-oriented electrical steel sheet according to the present disclosure further comprises at least one of Mo, Ni, Co, Cu and Cr in a total amount of 0.015-1.85% by mass.

Preferably, the number of Al₂O₃ inclusions with a size of 1.5 µm or more in the non-oriented electrical steel sheet according to the present disclosure is not more than 3 counts/mm², more preferably not more than 2 counts/mm².

Preferably, in the non-oriented electrical steel sheet according to the present disclosure, inevitable impurities include P, S, N and Ti, wherein in mass percentage, P≤0.024%, S≤0.0025%, N≤0.0035%, Ti≤0.0018%.

Preferably, the content of Sn in the non-oriented electrical steel sheet according to the present disclosure is 0.0065-0.25% by mass.

Preferably, the non-oriented electrical steel sheet according to the present disclosure has a fatigue strength S₁₅₀ at 150 °C of ≥ 465 MPa.

Preferably, in the non-oriented electrical steel sheet according to the present disclosure, the ratio of the fatigue strength S₁₅₀ at 150 °C to the fatigue strength S₂₅ at 25 °C, S₁₅₀/S₂₅, satisfies 1.0<S₁₅₀/S₂₅≤1.12.

Preferably, the non-oriented electrical steel sheet according to the present disclosure has a thickness of 0.20-0.35 mm.

The present disclosure further provides a method for manufacturing the non-oriented electrical steel sheet, comprising the following steps performed in sequence: smelting, RH refining, casting, hot rolling, normalizing annealing, cold rolling, final annealing, and application of insulation coating, wherein in the RH refining step: a circulating gas flow rate V₁ during decarburization and a circulating gas flow rate V₀ at the end of decarburization satisfy the following relationships: V₁/V₀≥1.12, and V₀ ≥ 135 Nm³/h; and after decarbonization, a free oxygen content in molten steel is not more than 225 ppm.

In the method according to the present disclosure, the heating temperature and finishing rolling temperature in the hot rolling step are not particularly limited, and may be temperatures commonly used in the field. In one embodiment, the heating temperature of the slab is 1150 °C, and the finishing rolling temperature of the steel coil is 800 °C. In one embodiment, the coiling temperature is 625 °C. In one embodiment, the thickness of the hot-rolled plate is 2.0-2.5 mm.

In the method according to the present disclosure, the holding temperature and holding time in the normalizing annealing step are not particularly limited, and may be temperatures and durations commonly used in the field. In one embodiment, the holding temperature for annealing is 950 °C and the holding time is 5 minutes.

In the method according to the present disclosure, cold rolling is carried out by either a single cold rolling process or a double cold rolling process.

In the method according to the present disclosure, the annealing temperature and holding time in the final annealing step are not particularly limited, and may be temperatures and durations commonly used in the field. In one embodiment, the final annealing temperature is 790 °C. In one embodiment, the final annealing holding time is 45 seconds.

The non-oriented electrical steel sheet manufactured by the method according to the present disclosure exhibits excellent high-temperature fatigue performance, which can meet the requirements for high-speed rotation of drive motors within the temperature range from room temperature to 150°C without deformation or fracture.

### DETAILED DESCRIPTION

Unless otherwise defined, all technical and scientific terms used herein have the same meanings as those commonly understood by those skilled in the art to which the present disclosure relates.

As used herein, the term "and/or" refers to and encompasses any and all possible combinations of one or more of the listed items.

Herein, the number of Al₂O₃ inclusions is statistically analyzed by a field emission scanning electron microscopy. Photographing and observation are conducted under the backscattered electron mode, with 20 or more consecutive view fields captured. The number of Al₂O₃ oxides with a size of 1.5 µm or more in the view fields is counted and expressed as the distribution density in units of "counts/mm²".

Herein, the fatigue strength S₂₅ and fatigue strength S₁₅₀ are determined according to the ISO *1099-2006 "Metallic materials - Fatigue testing - Axial force-controlled method",* at testing ambient temperatures of 25±5 °C and 150±3 °C, respectively. The fatigue limit (fatigue strength) is calculated based on a survival rate of 50%.

The design principles of each chemical element in the non-oriented electrical steel sheet according to the present disclosure are as follows:
C: In the non-oriented electrical steel sheet according to the present disclosure, carbon is an impurity element. When the carbon content exceeds 0.0028%, excessive carbide precipitates will form, resulting in deteriorated iron loss performance. However, as C is an element that is inevitably present in steel, its content cannot be zero. The present disclosure aims to control its upper limit and it is desired that the content be as low as possible.

Si: In the non-oriented electrical steel sheet according to the present disclosure, Si can significantly increase the electrical resistivity of the steel sheet, reduce the iron loss of material, and meanwhile improve the high-temperature fatigue strength of the steel sheet. When the content of Si is less than 3.05%, the improvement in fatigue strength is limited, making it difficult to ensure that the fatigue strength of the material at 150 °C is 465 MPa or more. When the content of Si exceeds 3.95%, the difficulty of cold rolling processing of the material increases sharply, making it difficult to achieve stable mass production, and the magnetic induction of the material will also be deteriorated. Therefore, in the non-oriented electrical steel sheet according to the present disclosure, the content of Si is controlled to 3.05-3.95%, preferably 3.15-3.55% by mass.

Mn: In the non-oriented electrical steel sheet according to the present disclosure, Mn can increase the electrical resistivity of material, improve iron loss performance, and combine with S to form MnS, improving the morphology of precipitates in the steel. However, when the amount of Mn added exceeds 0.65%, the hardness of the strip increases, which is not conducive to cold rolling processing. Therefore, in the non-oriented electrical steel sheet according to the present disclosure, the content of Mn is controlled to 0.12-0.65%, preferably 0.25-0.45% by mass.

Al: In the non-oriented electrical steel sheet according to the present disclosure, Al can increase the electrical resistivity of material and reduce iron loss. When the content of Al exceeds 1.15%, the magnetic induction of the finished product deteriorates significantly. When the content of Al is below 0.14%, it does not provide a significant effect on improving iron loss. Therefore, in the non-oriented electrical steel sheet according to the present disclosure, the content of Al is controlled to 0.14-1.15%, preferably 0.45-0.95% by mass.

Sn: In the non-oriented electrical steel sheet according to the present disclosure, Sn can segregate at grain boundaries, suppress oxidation within the steel sheet, and improve the favorable texture of the annealed microstructure of the finished product. However, excessive addition of Sn may lead to an increase in surface defects on the steel. Therefore, in the non-oriented electrical steel sheet according to the present disclosure, the content of Sn is controlled to 0.0035-0.25% by mass. In some preferred embodiments, the content of Sn is controlled to 0.0065-0.25% by mass.

In order to further improve the performance of the non-oriented electrical steel sheet according to the present disclosure, it is further preferred to add an appropriate amount of Ca and rare earth metals (REM) to the steel.

Ca: In the non-oriented electrical steel sheet according to the present disclosure, Ca can react with S and O in the steel to form structurally stable CaS and CaO, improving the morphology and distribution of inclusions in the molten steel, reducing the formation of small inclusions, and facilitating the reduction of iron loss. However, when the Ca content is too high, it can lead to the formation of excessive oxide inclusions, affecting the surface quality of the steel sheet. Therefore, in the non-oriented electrical steel sheet according to the present disclosure, the content of Ca may be controlled to 0.0002-0.0065% by mass. In some preferred embodiments, the content of Ca element may be controlled to 0.0005-0.0065% by mass.

REM: In the non-oriented electrical steel sheet according to the present disclosure, rare earth metals tend to combine with harmful elements such as sulfur and oxygen. By adding a suitable amount of rare earth metals, it is possible to purify the molten steel, promote the growth of small inclusions, and improve recrystallized grain microstructure of the finished steel sheet. However, when the REM content is too high, it will cause steel surface defects and deterioration of the magnetic properties of the steel sheet. Therefore, in the non-oriented electrical steel sheet according to the present disclosure, the content of REM may be controlled to 0.0002-0.015% by mass. In some preferred embodiments, the content of REM may be controlled to 0.0005-0.008% by mass.

In order to further improve the properties of the non-oriented electrical steel sheet according to the present disclosure, the steel may preferably comprise at least one of Mo, Ni, Co, Cu and Cr, and the total amount of these elements is controlled to 0.015-1.85% by mass. In the non-oriented electrical steel sheet according to the present disclosure, Mo, Ni, Co, Cu and Cr can increase the electrical resistivity of the steel sheet, reduce losses, and improve material strength. Therefore, one or more of these elements may be added, and the total addition amount may be controlled to 0.015-1.85%.

In the manufacturing process of the non-oriented electrical steel sheet according to the present disclosure, in the RH refining process, aluminum combines with free oxygen in the molten steel during aluminum deoxidation and aluminum alloying treatment, generating a large amount of Al₂O₃ inclusions. Such inclusions are hard and have a high melting point, which are extremely detrimental to the fatigue performance of the steel sheet. This is especially true for large Al₂O₃ inclusions with a size of 1.5 µm or more. Under repeated alternating loads, stress concentration and strain concentration occur around large Al₂O₃ inclusions, becoming one of the important crack sources for fatigue fracture. The inventors have found that when the number of Al₂O₃ inclusions with a size of 1.5 µm or more in the non-oriented electrical steel sheet is not more than 4.5 counts/mm², the non-oriented electrical steel sheet can exhibit good high-temperature fatigue performance.

In the non-oriented electrical steel sheet according to the present disclosure, P, S, N and Ti are all impurity elements in the non-oriented electrical steel sheet. Within the limits permitted by technical conditions, in order to obtain a steel with superior performance and higher quality, the contents of impurity elements in the steel should be reduced as much as possible.

P: In the non-oriented electrical steel sheet according to the present disclosure, P tends to segregate at grain boundaries, increasing material brittleness. Therefore, in the non-oriented electrical steel sheet according to the present disclosure, the content of P may be controlled to 0.024% or less by mass. In some preferred embodiments, the content of P element may be controlled to 0.02% or less by mass.

S: In the non-oriented electrical steel sheet according to the present disclosure, when the content of S is too high, it reacts with Mn to form a large amount of sulfide precipitates, especially during the stress relief annealing process. These precipitates hinder grain growth and significantly deteriorate the iron loss performance of the steel sheet. Therefore, in the non-oriented electrical steel sheet according to the present disclosure, the content of S may be controlled to 0.0025% or less by mass.

N: In the non-oriented electrical steel sheet according to the present disclosure, when the N content is too high, it combines with various elements in the steel to form a large number of small nitrides, hindering grain growth and deteriorating magnetic properties. Therefore, in the non-oriented electrical steel sheet according to the present disclosure, the content of N may be controlled to 0.0035% or less by mass. In some preferred embodiments, the content of N may be controlled to 0.0030% or less by mass.

Ti: In the non-oriented electrical steel sheet according to the present disclosure, Ti reacts with carbon and nitrogen to form titanium carbide and titanium nitride precipitates, which pin grain boundaries and hinder grain growth during recrystallization, leading to deterioration of iron loss performance. Therefore, in the non-oriented electrical steel sheet according to the present disclosure, the content of Ti may be controlled to 0.0018% or less, preferably 0.0015% or less by mass.

In some embodiments, the non-oriented electrical steel sheet according to the present disclosure has a fatigue strength S₁₅₀ at 150 °C of ≥ 465 MPa, and the ratio of S₁₅₀ to S₂₅ (i.e., S₁₅₀/S₂₅) satisfies 1.0<S₁₅₀/S₂₅<1.12. When the above conditions are met, on one hand, the fatigue performance requirements of a driving motor under repeated startups and high-speed rotation are fulfilled, preventing failure, deformation or fracture of the material during operation. On the other hand, the fatigue strength of the non-oriented electrical steel sheet according to the present disclosure at a rated operating environment temperature of 150 °C is further improved, with the ratio of fatigue strength at 150 °C to fatigue strength at 25 °C being not less than 1.02, thereby ensuring that the drive motor rotor can operate repeatedly and stably at high speeds at 150 °C or below.

The present disclosure further provides a method for manufacturing the non-oriented electrical steel sheet, comprising the following steps: smelting, RH refining, casting, hot rolling, normalizing annealing, cold rolling, final annealing (continuous annealing), and application of insulation coating, wherein in the RH refining step: a circulating gas flow rate V₁ during decarburization and a circulating gas flow rate V₀ at the end of decarburization satisfy the following relationships: V₁/V₀≥1.12, and V₀ ≥ 135 Nm³/h; and after decarbonization, a free oxygen content in molten steel is not more than 225 ppm.

In the manufacturing method of the non-oriented electrical steel sheet according to the present disclosure, by controlling the free oxygen content in molten steel after decarburization during the RH refining process to not exceed 225 ppm, it is possible to prevent the subsequent increase of oxide inclusions caused by excessive free oxygen content in the molten steel during this stage.

In the manufacturing method of the non-oriented electrical steel sheet according to the present disclosure, the removal of inclusions with large particle size can be achieved by controlling the circulating gas flow rate during the RH refining process. In the RH refining process, gas is injected into the molten steel, causing the molten steel to circulate between the ladle and the vacuum vessel. In this process, inclusions float upward along with the flowing molten steel and are captured by the slag layer, thereby achieving purification of the molten steel.

In the manufacturing method of the non-oriented electrical steel sheet according to the present disclosure, the circulating gas flow rate V₀ at the end of decarburization is set to 135 Nm³/h or more. After the addition of aluminum particles or ingots, the circulating gas flow rate V₁ and V₀ are controlled such that the following relationship is satisfied: V₁/V₀ ≥ 1.12. The flow of molten steel is controlled by the circulating gas flow rate to control the residence time and movement of inclusions in the molten steel. By adopting such process conditions, the Al₂O₃ oxide inclusions generated by the reaction between aluminum and free oxygen in steel are given sufficient time to aggregate and grow, and quickly float up to be captured and removed by the slag layer.

Through the above technical means, the number of Al₂O₃ inclusions with a size of 1.5 µm or more in the steel sheet can be reduced to not more than 4.5 counts/mm².

In the manufacturing method according to the present disclosure, the steps of hot rolling, normalizing annealing, cold rolling, final annealing and application of insulation coating are not particularly limited and conventional process parameters in the field may be employed.

The non-oriented electrical steel sheet and its manufacturing method according to the present disclosure have the following advantages and beneficial effects:
The non-oriented electrical steel sheet according to the present disclosure can meet the fatigue performance requirements of the material under repeated startups and high-speed rotation of driving motors, ensuring that the material does not fail, deform or fracture during operation.

The non-oriented electrical steel sheet according to the present disclosure exhibits excellent fatigue performance at a rated operating environment temperature of 150 °C, ensuring that the drive motor rotor can operate repeatedly and stably at high speeds at 150 °C or less.

The following will provide further explanation and illustration of the non-oriented electrical steel sheet according to the present disclosure and manufacturing method therefor through specific embodiments. However, this explanation and illustration shall not be construed as unduly limiting the technical solution of the present disclosure.

### Examples 1-10 and Comparative Examples 1-6

The non-oriented electrical steel sheets of Examples 1-10 and Comparative Examples 1-6 were prepared through the following steps:
(1) The molten steel in the blast furnace was subjected to molten steel pretreatment and converter steelmaking.
(2) Decarbonization, deoxidation and alloying treatment were carried out in RH refining. In the RH refining step: after the addition of aluminum material, the circulating gas flow rate V₁ during decarburization and the circulating gas flow rate V₀ at the end of decarburization were controlled such that the following relationship was satisfied: V₁/V₀≥1.12, and V₀ ≥ 135 Nm³/h. After decarbonization, the free oxygen content in the molten steel was controlled to not more than 225 ppm. The specific process parameters for Examples and Comparative Examples in this step are shown in Table 2.
(3) After refining, the molten steel was continuously cast to obtain cast slabs. The chemical compositions of the cast slabs in Examples and Comparative Examples are shown in Tables 1-1 and 1-2.
(4) Hot rolling: The heating temperature of the slab was 1150 °C, the finishing rolling temperature of the steel coil was 800 °C, and the coiling temperature was 625 °C, to obtain hot-rolled plates with a thickness specification of 2.0-2.5 mm.
(5) Normalizing annealing: The Normalizing annealing temperature was 950 °C and the holding time was 5 minutes.
(6) Cold rolling was performed to obtain finished products with a thickness of 0.20-0.35 mm. Examples 2 and 6 adopted double cold rolling process, and other Examples and Comparative Examples adopted single cold rolling process.
(7) Final annealing and application of insulation coating: The annealing temperature was 790 °C, and the holding time was 45 s.

Tables 1-1 and 1-2 list the mass percentages of chemical elements in the non-oriented electrical steel sheets of Examples 1-10 and the comparative steel sheets of Comparative Examples 1-6.

**Table 1-1 (wt%, the balance being Fe and other inevitable impurities)**

| No. | C | Si | Mn | Al | Sn | Ca | REM |
|---|---|---|---|---|---|---|---|
| Example 1 | 0.0018 | 3.95 | 0.25 | 0.14 | 0.0035 | / | / |
| Example 2 | 0.0017 | 3.55 | 0.45 | 0.95 | 0.08 | 0.0065 | 0.0002 |
| Example 3 | 0.0022 | 3.74 | 0.30 | 0.55 | 0.015 | / | / |
| Example 4 | 0.0014 | 3.56 | 0.52 | 1.15 | 0.085 | 0.0003 | 0.0015 |
| Example 5 | 0.0013 | 3.42 | 0.55 | 1.09 | 0.02 | 0.0005 | 0.0005 |
| Example 6 | 0.0016 | 3.31 | 0.65 | 0.45 | 0.06 | / | / |
| Example 7 | 0.0015 | 3.05 | 0.25 | 0.75 | 0.25 | / | / |
| Example 8 | 0.0021 | 3.15 | 0.35 | 0.61 | 0.0065 | 0.0002 | 0.015 |
| Example 9 | 0.0013 | 3.25 | 0.12 | 1.00 | 0.0045 | 0.0006 | 0.001 |
| Example 10 | 0.0010 | 3.50 | 0.45 | 0.95 | 0.005 | / | / |
| Comparative Example 1 | 0.0023 | 3.35 | 0.35 | 1.00 | 0.055 | / | / |
| Comparative Example 2 | 0.0018 | 3.45 | 0.56 | 0.55 | 0.004 | 0.0005 | / |
| Comparative Example 3 | 0.0020 | 3.75 | 0.25 | 0.45 | 0.095 | 0.004 | 0.009 |
| Comparative Example 4 | 0.0020 | ***3.04*** | 0.55 | ***0.13*** | / | / | / |
| Comparative Example 5 | ***0.0037*** | ***2.85*** | 0.25 | ***2.00*** | 0.005 | / | / |
| Comparative Example 6 | 0.0021 | 3.40 | ***0.1*** | ***0.005*** | ***0.003*** | / | / |

**Table 1-2 (wt%, the balance being Fe and other inevitable impurities)**

| No. | P | S | N | Ti | Other elements |
|---|---|---|---|---|---|
| Example 1 | 0.015 | 0.0012 | 0.0015 | 0.0005 | / |
| Example 2 | 0.021 | 0.0006 | 0.0015 | 0.0013 | / |
| Example 3 | 0.007 | 0.0017 | 0.0008 | 0.0012 | Ni: 0.2 |
| Example 4 | 0.012 | 0.0008 | 0.0015 | 0.0015 | Cr: 0.015 |
| Example 5 | 0.012 | 0.001 | 0.0013 | 0.0008 | Mo: 1.5 |
| Example 6 | 0.024 | 0.0006 | 0.0015 | 0.0009 | Cu: 1.7 |
| Example 7 | 0.015 | 0.0024 | 0.0015 | 0.0004 | Co+Ni+Cr: 1.8 |
| Example 8 | 0.013 | 0.0015 | 0.0008 | 0.0005 | Mo+Ni+Co+Cu: 1.85 |
| Example 9 | 0.017 | 0.0005 | 0.0017 | 0.0017 | Mo+Ni+Co+Cu+Cr: 1.5 |
| Example 10 | 0.009 | 0.0015 | 0.0034 | 0.0011 | Co: 0.018 |
| Comparative Example 1 | 0.021 | 0.0018 | 0.0014 | 0.0008 | / |
| Comparative Example 2 | 0.017 | 0.0018 | 0.0021 | 0.0011 | / |
| Comparative Example 3 | 0.012 | 0.0012 | 0.0012 | 0.0017 | / |
| Comparative Example 4 | 0.020 | 0.0015 | 0.0011 | 0.0016 | / |
| Comparative Example 5 | 0.024 | 0.0015 | 0.0033 | 0.0015 | / |
| Comparative Example 6 | 0.0018 | 0.0011 | 0.0022 | ***0.0021*** | / |

Table 2 lists the specific process parameters in the RH refining step for the non-oriented electrical steel sheets of Examples 1-10 and the comparative steel sheets of Comparative Examples 1-6.

**Table 2**

| No. | Free oxygen content (ppm) | Circulating gas flow rate V₀ (Nm³/h) | Circulating gas flow rate V₁ (Nm³/h) | V₁/V₀ |
|---|---|---|---|---|
| Example 1 | 200 | 135 | 165 | 1.22 |
| Example 2 | 185 | 145 | 165 | 1.14 |
| Example 3 | 225 | 150 | 168 | 1.12 |
| Example 4 | 195 | 150 | 180 | 1.20 |
| Example 5 | 180 | 150 | 180 | 1.20 |
| Example 6 | 195 | 160 | 195 | 1.22 |
| Example 7 | 220 | 160 | 195 | 1.22 |
| Example 8 | 215 | 160 | 195 | 1.22 |
| Example 9 | 155 | 200 | 230 | 1.15 |
| Example 10 | 162 | 200 | 230 | 1.15 |
| Comparative Example 1 | 200 | ***100*** | 130 | 1.30 |
| Comparative Example 2 | ***500*** | 140 | 140 | ***1.00*** |
| Comparative Example 3 | 265 | 155 | 150 | **0.97** |
| Comparative Example 4 | 200 | 160 | 195 | 1.22 |
| Comparative Example 5 | 200 | 155 | 185 | 1.19 |
| Comparative Example 6 | 200 | 200 | 240 | 1.20 |

Next, samples were taken from the non-oriented electrical steel sheets of Examples 1-10 and the comparative steel sheets of Comparative Examples 1-6, and these non-oriented electrical steel sheet samples were tested. The obtained test results are listed in Table 3 below. The relevant performance testing methods are as follows:
Fatigue performance: Testing was performed according to the ISO 1099-2006 *"Metallic materials - Fatigue testing - Axial force-controlled method".* A servohydraulic fatigue testing machine with a maximum capacity of 10 kN was used. The test parameters were set as follows: test ambient temperature of 25±5 °C and 150±3 °C; sinusoidal waveform control; stress ratio R=0.1; frequency of 20-30 Hz, and a maximum number of cycles of 1.0×10⁷.

Number of Al₂O₃ inclusions: Statistical analysis was performed using a field emission scanning electron microscopy. A 20×20 mm sample was randomly cut from the base steel sheet, ground to the 1/2 thickness position of the sheet, and subjected to mechanical polishing or electrochemical polishing. Photographing and observation were then carried out under backscattered electron mode to identify Al₂O₃ oxide inclusions and count their number. 20 or more consecutive fields of view were captured, the number of Al₂O₃ oxide inclusions with a size ≥ 1.5 µm was counted, and the distribution density was calculated in units of "counts/mm²".

**Table 3**

| No. | Steel sheet thickness (mm) | Number of Al₂O₃ inclusions with a size of 1.5 µm or more (counts/mm²) | Fatigue strength S₂₅ (MPa) | **Fatigue** strength S₁₅₀ (MPa) | S₁₅₀/S₂₅ |
|---|---|---|---|---|---|
| Example 1 | 0.27 | 1 | 598 | 620 | 1.04 |
| Example 2 | 0.25 | 0.5 | 475 | 532 | 1.12 |
| Example 3 | 0.30 | 2 | 552 | 587 | 1.06 |
| Example 4 | 0.30 | 1 | 498 | 515 | 1.03 |
| Example 5 | 0.30 | 2 | 512 | 548 | 1.07 |
| Example 6 | 0.30 | 0.5 | 489 | 528 | 1.08 |
| Example 7 | 0.25 | 2 | 490 | 532 | 1.09 |
| Example 8 | 0.20 | 1 | 496 | 542 | 1.09 |
| Example 9 | 0.20 | 1 | 514 | 523 | 1.02 |
| Example 10 | 0.35 | 2 | 485 | 528 | 1.09 |
| Comparative Example 1 | 0.35 | ***6*** | ***455*** | **445** | ***0.98*** |
| Comparative Example 2 | 0.25 | ***8*** | ***395*** | ***368*** | ***0.93*** |
| Comparative Example 3 | 0.20 | ***10*** | ***415*** | ***401*** | ***0.97*** |
| Comparative Example 4 | 0.20 | 4 | ***340*** | **334** | ***0.98*** |
| Comparative Example 5 | 0.25 | 3 | ***304*** | ***325*** | 1.07 |
| Comparative Example 6 | 0.30 | 4 | ***385*** | ***354*** | ***0.92*** |

It can be seen from Table 3 above that the steels of Examples 1-10 all exhibited a fatigue strength S₂₅ at room temperature higher than 475 MPa. Moreover, the fatigue strength S₁₅₀ at 150 °C not only exhibited no decrease but was further improved, with all values exceeding 500 MPa. The ratios of S₁₅₀ to S₂₅ (i.e., S₁₅₀/S₂₅) fell within the range of 1.0-1.12. Therefore, the non-oriented electrical steel sheets of Examples met the fatigue performance requirements for repeated startups and high-speed operation of drive motors, ensuring that the material does not experience failure, deformation, or fracture during operation.

In contrast, the process parameters for RH refining in Comparative Examples 1-3 fell outside the range of the present invention. In Comparative Example 1, the circulating gas flow rate was too low, resulting in a decreased molten steel circulation rate and insufficient flotation and removal of Al₂O₃ oxide inclusions.

For the steels of Comparative Examples 2 and 3, the free oxygen contents in the molten steel at the end of decarburization during RH refining were too high, resulting in the generation of a large amount of Al₂O₃ upon the addition of aluminum ingots. At the same time, the circulating gas flow rate V₁ was not increased accordingly, causing the Al₂O₃ oxide to aggregate and grow, without sufficient flotation and removal, ultimately leading to poor fatigue performance of the finished product.

For the steels of Comparative Examples 4-6, the chemical compositions were outside the scope of the present invention, resulting in low final fatigue strength that cannot meet the performance requirements.

All publications, patent applications, patents, and other references mentioned in the present disclosure are incorporated herein by reference in their entirety.

Although the present disclosure has been illustrated and described with reference to certain preferred embodiments, it should be understood by those skilled in the art that the foregoing description is provided in conjunction with specific embodiments to further elaborate the present disclosure, and it should not be construed as the specific embodiment of the present disclosure being limited to these explanations. Various changes in form and detail may be made by those skilled in the art, including making several simple deductions or substitutions, without departing from the spirit and scope of the present disclosure.

## Claims

1. A non-oriented electrical steel sheet, wherein in addition to Fe and inevitable impurities, the non-oriented electrical steel sheet further comprises the following chemical elements in mass percentage:
0<C≤0.0028%, Si: 3.05-3.95%, Mn: 0.12-0.65%, Al: 0.14-1.15%, Sn: 0.0035-0.25%;
wherein the number of Al₂O₃ inclusions with a size of 1.5 µm or more in the non-oriented electrical steel sheet is not more than 4.5 counts/mm².

2. The non-oriented electrical steel sheet according to claim 1, wherein the non-oriented electrical steel sheet comprises the following chemical elements in mass percentage:
0<C≤0.0028%, Si: 3.05-3.95%, Mn: 0.12-0.65%, Al: 0.14-1.15%, Sn: 0.0035-0.25%; the balance being Fe and inevitable impurities.

3. The non-oriented electrical steel sheet according to claim 1 or 2, wherein the non-oriented electrical steel sheet further comprises Ca and/or REM, and wherein in mass percentage, Ca: 0.0002-0.0065% and/or REM: 0.0002-0.015%.

4. The non-oriented electrical steel sheet according to any one of claims 1 to 3, wherein the non-oriented electrical steel sheet further comprises at least one of Mo, Ni, Co, Cu and Cr in a total amount of 0.015-1.85% by mass.

5. The non-oriented electrical steel sheet according to any one of claims 1 to 4, wherein the number of Al₂O₃ inclusions with a size of 1.5 µm or more in the non-oriented electrical steel sheet is not more than 3 counts/mm², preferably not more than 2 counts/mm².

6. The non-oriented electrical steel sheet according to any one of claims 1 to 5, wherein the inevitable impurities include P, S, N and Ti, and wherein in mass percentage, P≤0.024%, S≤0.0025%, N≤0.0035%, Ti≤0.0018%.

7. The non-oriented electrical steel sheet according to any one of claims 1 to 6, wherein the content of Sn is 0.0065-0.25% by mass.

8. The non-oriented electrical steel sheet according to any one of claims 1 to 7, wherein the non-oriented electrical steel sheet has a fatigue strength S₁₅₀ at 150 °C of ≥ 465 MPa, and preferably, a ratio of S₁₅₀ to S₂₅, S₁₅₀/S₂₅, satisfying: 1.0 ≤ S₁₅₀/S₂₅ ≤ 1.12.

9. The non-oriented electrical steel sheet according to any one of claims 1 to 8, wherein the non-oriented electrical steel sheet has a thickness of 0.20-0.35 mm.

10. A method for manufacturing the non-oriented electrical steel sheet according to any one of claims 1 to 9, comprising the following steps performed in sequence: smelting, RH refining, casting, hot rolling, normalizing annealing, cold rolling, final annealing, and applying insulation coating, wherein in the RH refining step:
a circulating gas flow rate V₁ during decarburization and a circulating gas flow rate V₀ at the end of decarburization satisfy the following relationships: V₁/V₀≥1.12, and V₀ ≥ 135 Nm³/h; and after decarbonization, a free oxygen content in molten steel is not more than 225 ppm.

11. The method according to claim 10, wherein the cold rolling is carried out by a single cold rolling process or a double cold rolling process.
